Europäisches Patentamt

European Patent Office

Office européen des brevets

(19)

(11) Publication number: **0 128 673**
**B1**

# EUROPEAN PATENT SPECIFICATION

(45) Date of publication of patent specification: **28.02.90**

(51) Int. Cl.⁵: **C 08 F 8/00, C 08 L 21/00**

(21) Application number: **84303287.1**

(22) Date of filing: **15.05.84**

(54) Ionizable olefin based resinous tackifiers for latex.

(30) Priority: **18.05.83 US 495881**

(43) Date of publication of application:
**19.12.84 Bulletin 84/51**

(45) Publication of the grant of the patent:
**28.02.90 Bulletin 90/09**

(84) Designated Contracting States:
**BE DE FR GB IT LU NL SE**

(56) References cited:
**DE-A-2 418 520**
**DE-A-2 547 329**
**US-A-4 017 441**

(73) Proprietor: **Sylvachem Corporation**
**200 South Sudduth Place**
**Panama City Florida 32404 (US)**

(72) Inventor: **Cardenas, Carlos G.**
**6730 Strawberry Lane**
**Jacksonville Florida (US)**
Inventor: **Ehmann, William J.**
**P.O. Box 882**
**Orange Park Florida (US)**
Inventor: **Evans, James M.**
**3602 Riverhall Road**
**Jacksonville Florida (US)**
Inventor: **Stark, Charles J.**
**11132 Windhaven Drive, South**
**Jacksonville Florida (US)**

(74) Representative: **Reichel, Wolfgang, Dipl.-Ing.**
**et al**
**Reichel und Reichel Parkstrasse 13**
**D-6000 Frankfurt am Main 1 (DE)**

EP 0 128 673 B1

Courier Press, Leamington Spa, England.

## Description

This invention relates to a method for making a dispersion of an ionizable resinous composition of a resinous hydrocarbon polymer which is especially useful in tackifying natural rubber latices and various other latices. These compositions are derived from cationally polymerizable olefins and produced as stable aqueous dispersions or emulsions without the aid of a dispersing system, which, when present, has been shown to diminish the properties of certain tackifiers (Skeist, I.: Handbook of Adhesives, Second Edition; Van Nostrand Reinhold: New York, 1974).

U.S. Patent 4,183,834 discloses tackifiers for various elastomeric latices made from a rosin acid, e.g., modified tall oil rosin or rosin acid oligomer, instead of the modified olefinic hydrocarbon resins of the present invention. It has been found that while the tackifier compositions of the aforesaid patent are particularly suited to tackifying synthetic elastomeric latices such as SBR (carboxylated butadiene/styrene) they are not as well suited to the tackifying of natural rubber latices. Surprisingly, the tackifiers of the present invention are especially well suited to the tackifying of natural rubber latices.

It is, therefore, a principal objective of the present invention to provide a novel tackifier composition useful to tackify latex polymers in general, and natural rubber latices in particular.

Briefly stated, the present invention is in a method for making a dispersion of a resinous composition which composition is reactive with an ionizing agent and which resinous composition is the reaction product of a polymerized unsaturated hydrocarbon comprising at least one terpene hydrocarbon, condensed with an unsaturated carboxylic acid or anhydride, and optionally partially esterified with a $C_1$—$C_{30}$ alcohol or phenol. The carboxylated and esterified resinous composition has a softening point not substantially above 125°C and an acid number of from 30 to 150. For dispersion in water the resinous product is neutralized with a volatile base, e.g., an amine to form an ionizable reaction product which is readily dispersible in water and then readily admixed with a latex, particularly a natural rubber latex.

The products of this invention are prepared by a multistep route that includes:

(a) forming a resinous hydrocarbon polymer by polymerizing a hydrocarbon comprising at least one terpene hydrocarbon in the presence of an acid catalyst,

(b) reacting the resultant polymer with an alpha-beta-unsaturated carboxylic acid, carboxylic acid anhydride, or a lower alkyl half ester of a dicarboxylic acid,

(c) subsequently, optionally esterifying with an aliphatic or aralkyl alcohol, which is a $C_1$—$C_{30}$ aliphatic, aralkyl alcohol or a phenol,

(d) neutralizing with a base which is a volatile ionizing agent, and

(e) mixing with water thereby obtaining a stable dispersion compatible with said elastomeric latices and imparting tack and peel strength to them.

In obtaining specific and preferred products that comprise this invention, we have polymerized a mixture of terpenes consisting of approximately 2% alpha-pinene, 88% beta-pinene and 10% dipentene, the latter referring to a complex mixture of limonene, alpha- and beta-phellandrene, terpinolene and alpha- and gamma-terpinene. Polymerization was effected by reaction with aluminum chloride, $AlCl_3$, in the presence of xylene as a solvent. This mixture of terpenes can be partially replaced by nonterpenoid olefins, such as those derived from petroleum, as long as the product resin contains residual olefinic unsaturation. We further anticipate that neither $AlCl_3$ nor xylene is critical to the production of the resins of this invention; thus, toluene, heptane, the menthanes, cyclohexanes, naphthas and the like may replace xylene, while $BF_3 \cdot Et_2O$, $CaCl_3$, $CH_3AlCl_2$, $TiCl_4$, and $H_2SO_4$ are examples of polymerization catalysts that serve as replacements for $AlCl_3$. $BF_3$ complexes are preferred. Examples of such complexes include $BF_3 \cdot$ diethyl ether, $BF_3 \cdot$ dibutyl ether, $BF_3 \cdot$ acetic acid, $BF_3 \cdot$ propanol, $BF_3 \cdot$ tetrahydrofuran, etc. The reaction temperature during combination of monomer and catalyst has, so far, proven to have a significant bearing upon the final properties of the invention. We believe that the critical temperature or temperature range required for the production of useful polymers must be determined for each monomer feed.

Suitable nonterpenoid polymerizable components are broadly monomeric $C_5$ to $C_{20}$ unsaturated hydrocarbons, and preferably $C_5$—$C_{10}$ hydrocarbons as the pure monomer, or as a mixture of two or more monomers. Desirably, the polymerizable composition is entirely terpenoid or where nonterpenoid components are present, the major amount of the polymerizable composition, i.e., more than 50% by weight, consists of a single, ethylenically unsaturated terpene hydrocarbon species, or a mixture of two or more ethylenically unsaturated terpene hydrocarbon species. It also appears that the minimum number of carbons in the polymerizable monomer is 5. Results below that number of carbon atoms have not been found to be satisfactory and 5 carbon atoms is on the border. We have used 18 carbon atom octadecene as a co-monomer with beta-pinene and produced a satisfactory tackifier in accordance herewith. Also, resinous hydrocarbons formed from mixtures of 5% to 95% beta-pinene, balance predominantly piperylene may be used to form tackifiers in accordance herewith.

Specific examples of $C_5$—$C_{20}$ unsaturated hydrocarbons include, therefore, 2 - methyl - 2 - butene, 2,3 - dimethyl - 1 - butene, 3 - methyl - 1 - pentene, 2 - methyl - 1 - pentene, 2 - methyl - 2 - pentene, 3 - methyl - 2 - pentene, isoprene, piperylene, piperylene dimers, 6 - methyl - 1 - heptene, octene-2, alpha-pinene, beta-pinene, dipentene, limonene, alpha and beta-phellandrene, terpinolene, alpha-, and gamma-terpinene, dodecene-2, octadecene-1, eicosene-1, and various mixtures including 2 or more of the above, e.g. a commercially available petroleum hydrocarbon mixture having the following composition:

| | |
|---|---|
| 3-methyl-1-pentene | 1.4% |
| 2-methyl-2-butene | 22.4% |
| 2-methyl-1-pentene | 2.5% |
| 2-methyl-2-pentene | 2.1% |
| isoprene | 2.6% |
| piperylene | 48.1% |
| piperylene dimer | 16.4% |
| Other unsat. hydrocarbons containing 5—6 C's | 4.5% |

In general, the resinous hydrocarbon polymers hereof have a softening point less than 125°C., and preferably between 50°C. and 110°C.

In certain instances, particularly where aluminum chloride is used as the polymerization catalyst, it will be found desirable to hold the hydrocarbon resin at an elevated temperature, i.e., from 150°C to 300°C, preferably above about 230°C, under an inert atmosphere, e.g., $N_2$, for from 5 to 20 hours.

The resinous hydrocarbon polymers prepared in this way are then reacted with an alpha-beta unsaturated carboxylic acid, acid anhydride or lower alkyl ester thereof, e.g., maleic anhydride, at temperatures in excess of 150°C. Such reactions can be performed in the presence of a suitable solvent, such as xylene, in which case the reaction must be performed under pressure, or in the absence of solvent. The preferred procedure employs no solvent and a temperature of 190°C. Two to twenty-four hours are required for completion of the reaction. The majority of the maleic anhydride used becomes chemically incorporated with the polymer, whereas unreacted anhydride and anhydride-derived by-products are removed by distillation. We believe that incorporation occurs through some combination of "ene" and Diels-Alder-type reactions, resulting in a product that contains several anhydride functional groups, although we do not wish to be bound by this belief. We have generally added xylene to the crude reaction product to aid in the distillative removal of the unreacted anhydride and anhydride-derived products, though its addition or their removal has not been found to be necessary.

The amount of maleic anhydride employed has a major impact on the dispersibility of the resin prepared as in step (c) as well as the tackifying properties of the dispersion from step (e). The compatibility of the latter in elastomeric latices is also affected by the extent of anhydride incorporation. With terpene resins, maximum incorporation is effected by reaction with 18—27 wt.% anhydride; however, the proper combination of resin dispersibility, dispersion compatibility and tackifying properties appears at this time to be attained through use of from about 5 to 15 wt.% anhydride, when the product is used in Hartex® 103, a commercially available natural rubber latex from Firestone, the useful range of anhydride may differ widely from polymer to polymer.

It is believed that maleic anhydride can be replaced by other unsaturated carbonyl compounds, such as citraconic anhydride, itaconic anhydride, fumaric acid and maleic acid (and their lower alkyl half esters). These compounds are illustrative of useful unsaturated carbonyl compounds, but the invention should not be interpreted as restricted to their use alone.

Reaction of the product of step (b) with an alcohol offers a way to adjust advantageously both the softening point and acid number of the resin to be dispersed. A variety of branched and straight chain alcohols, including $C_1$—$C_{30}$ aliphatic alcohols, aralkyl alcohols and phenols, may be utilized in this regard. Specific examples of these alcohols are 1-hexanol, 1-decanol, 1-octadecanol, 2 - ethyl - 1 - hexanol, cyclohexanol, benzyl alcohol, citronellol, methoxytriglycol, methyl carbitol®, and butyl cellosolve®. In general, sufficient alcohol or phenol is used to produce a product with a softening point less than about 125°C and preferably less than 95°C and an acid number greater than 30, although we do not wish to be bound to these limits. Optionally, reaction of the product of step (b) with an alcohol can be omitted. The temperature of esterification is generally above 100°C and preferably above 150°C.

Reaction of the product of step (c), either esterified or unesterified, with sufficient base renders the product water-dispersible. Such a base should be volatile at temperatures which do not decompose the latex, the resin, the adherend(s) or any other added material. Such bases include ammonia, and amines such as, N - methylaminoethanol, N,N - dimethylaminoethanol, diethanolamine and N,N - diethylaminoethanol. The amount and type of base depends upon the resin to be dispersed and the desired properties of the resultant dispersion.

The product of step (d) can be dispersed in water by its addition to water or by addition of water to it. Dispersions containing greater than 50 wt.% of the product of step (d) can be generated with the proper combination of step (c), base, and water. Alternatively, these three materials may be mixed and stirred until a dispersion is obtained.

Such dispersions can be used alone or in conjunction with other tackifiers to tackify natural rubber, neoprene and acrylic latices. Ethylene-vinyl acetate copolymer latex may also be tackified.

In order to facilitate a greater understanding of the invention, the following examples are presented.

Example I

Xylene (1,875 g) and aluminum chloride (37.5 g) were mixed in a 5 liter vessel for 0.5 hour; the mixture was protected with a positive nitrogen atmosphere. Afterwards, it was warmed to 70°C and 1,250 g of a

3

terpene composition consisting of approximately 2 wt.% alpha-pinene, 88 wt.% beta-pinene and 10 wt.% dipentene was added over about a 1 hour interval. External cooling was employed to maintain a maximum temperature of 80°C. The mixture was stirred for 0.5 hour after completion of addition, then a solution of 37.5 g NaOH and 187.5 g methanol was rapidly added. After an additional 0.5 hour, the resultant material was heated to reflux for 2.0 hour, then water and volatiles were removed until the pot temperature attained 143°C. After cooling to 130°C, the solids were separated by filtration and the volatiles were removed from the filtrate with the aid of a $N_2$ flow until the pot temperature reached 270°C.

This temperature and the $N_2$ flow were maintained for an additional 18 hours. The resultant terpene resin weighed 1,246.8 g and had a ring and ball softening point of 55°C.

Maleic anhydride (224.4 g, 18 wt.%) was added to the resin and the mixture was stirred under a positive $N_2$ atmosphere for 24 hours at 190°C. After this time, the mixture was briefly cooled, then 850 ml xylene was added and the solution was filtered. Volatiles were then removed under vacuum until a pot temperature of 220°C and approximately 2 mm Hg pressure were obtained. The residue weighed 1,347.4 g and displayed a softening point of 104°C and an acid number of 151.

A portion of this material (300 g) was reacted with octadecanol (109.2 g) by heating the materials to 220°C for 16 hours. The amount of alcohol used was that which is theoretically required to convert all the anhydride groups of the molecule to the corresponding half acid esters, and is calculated on the basis of acid number. We do not, however, wish our invention to be dependent on such an occurrence. The product had a softening point of 48°C, and an acid number of 48.

A portion of this resin (50 g) was then heated to 80°C and treated with 1.91 g of N,N - dimethylaminoethanol, an amount of amine sufficient to reduce the acid number by one-half, assuming zero weight for the amine. Such a process is often referred to as neutralization; and in this case, fifty per cent neutralization of the resin. A temperature of 80—100°C was maintained for 15 minutes after addition, then the mixture was cooled to 80°C. Water was then added slowly to the stirred mixture. An apparent inversion was observed after 82 mL of water was added, where upon heating was discontinued. The mixture thickened somewhat as it cooled, so 2 ml $H_2O$ was added to produce the final, fluid product, which appeared to be stable dispersion of 36 wt.% solids.

The resulting dispersion was formulated with Hartex® 103, a natural rubber latex, at several resin/rubber wt. ratios. Films were prepared on Mylar® film and tack and peel values were obtained according to PSTC (Pressure Sensitive Tape Council, Glenwood, Ill.) methods *1, 5* and *6*. Evaluation of the coated Mylar® was also done with a Polyken Probe apparatus.

## TABLE I

| Resin/rubber wt. ratio | 180° Peel PSTC 1 | 90° Quick stick PSTC 5 | Polyken probe | Rolling ball PSTC 6 |
|---|---|---|---|---|
| 0/100 | 0 | 0 | 0 | >10 |
| 30/70 | 0.3 | 0.2 | 0 | >10 |
| 40/60 | 0.7 | 0.3 | 177 | >10 |
| 50/50 | 1.2 | 0.7 | 206 | >10 |
| 60/40 | 1.3 | 0.5 | 282 | >10 |
| 70/30 | 1.4 | 0.7 | 350 | >10 |

Example II

A terpene resin was prepared as in Example I. It was reacted with 12 wt.% maleic anhydride to produce a resin with softening point 97°C and acid number 104. This product was, in turn, reacted with an amount of octadecanol equivalent in moles to the number of anhydride groups, determined on the basis of acid number data. Softening Point 60.1°C; Acid No. 53.

Fifty grams of this material was then sequentially reacted with 2.1 g N,N - dimethylaminoethanol, an amount required for fifty per cent neutralization, and water in a procedure similar to that of Example I. A 41 wt per cent solids dispersion was formed which was formulated with Hartex 103 at several resin/rubber ratios. These were coated on Mylar® and tested as in Example I (Table II).

4

TABLE II

| Resin/rubber wt. ratio | 180° Peel PSTC 1 | 90° Quick stick PSTC 5 | Polyken probe | Rolling ball PSTC 6 |
|---|---|---|---|---|
| 30/70 | 0.1 | 0.2 | 136 | >10 |
| 40/60 | 0.2 | 0.2 | 148 | >10 |
| 50/50 | 0.4 | 0.2 | 490 | 9 |
| 60/40 | 1.6 | 0.9 | 796 | >10 |
| 70/30 | 2.6 | 1.4 | 650 | >10 |

Example III

A dispersion was prepared as in Examples I and II, except that only 9 wt.% maleic anhydride was used in reaction with the terpene resin. Formulations with Hartex® 103 displayed the following properties (Table III).

TABLE III

| Resin/rubber wt. ratio | 180° Peel PSTC 1 | 90° Quick stick PSTC 5 | Polyken probe | Rolling ball PSTC 6 |
|---|---|---|---|---|
| 30/70 | 0.15 | 0.15 | 296 | 2.5 |
| 40/60 | 0.6 | 0.4 | 532 | 2.1 |
| 50/50 | 1.0 | 0.65 | 683 | 3.8 |

Example IV

Xylene (1000 g), $BF_3 \cdot Et_2O$ (40 g) and n-hexanol (14.4 g) were mixed in a 5 liter vessel and cooled to 10°C. A positive nitrogen atmosphere was supplied. Afterwards, a terpene mixture consisting of approximately 92% beta-pinene, 2% alpha-pinene and 6% dipentene (the latter referring to a mixture of limonene, alpha- and beta-phellandrene, terpinolene and alpha- and gamma-terpinene) was added to the contents of the 5 liter vessel in less than one hour. One-half hour after completion of addition, the reaction was warmed to room temperature, then quenched with 100 g of 20% sodium hydroxide. After warming to 80°C, the organic layer was separated from the aqueous one and was washed once with 100 g water. Subsequently, it was condensed by distillative removal of xylene and other volatiles until a pot temperature of 230°C had been maintained for one to two hours. Distillation was aided by a nitrogen flow through the vessel. A terpene resin was obtained in 92 wt.% yield, based on the weight of monomer, that displayed a 70°C softening point.

Nine weight per cent maleic anhydride was added to a portion of this resin, and the mixture was heated under $N_2$ for 24 hours. Afterwards, the product mixture was cooled to 140°C; then, an amount of xylene, equal to the weight of terpene resin employed, was added to the mixture. The resultant solution was washed with an amount of water, equal to 2/3 the weight of xylene, for 0.5 hour. Next, the organic layer was isolated and xylene and other volatiles were removed from the modified terpene resin by distillation to 220°C under a vacuum of 10 Torr. The resinous residue displayed an acid number of 94 and a softening point of 87°C.

The product of the above reaction was then treated with 15.8 wt. per cent n-octadecanol and the mixture was heated to 150°C for eight hours. The product exhibited an acid number of 57 and a softening point of 60°C.

A portion of this material was reacted with 4.6 wt.% N,N - dimethylaminoethanol at 80—90°C. Next, sufficient $H_2O$ was added to make a dispersion consisting of 40% resin. The dispersion was evaluated for its ability to tackify Hartex® 103 (Table IV).

## TABLE IV

| Resin/rubber wt. ratio | 180° Peel PSTC 1 | 90° Quick stick PSTC 5 | Polyken probe | Rolling ball PSTC 6 |
|---|---|---|---|---|
| 40/60 | 0.4 | 0.4 | 510 | 0.5 |
| 50/50 | 1.1 | 0.9 | 725 | 1.2 |
| 60/40 | 1.9 | 1.6 | 905 | 3.4 |

Example V

A portion of the terpene resin described in Example IV was reacted with 4.5 wt. per cent maleic anhydride as exemplified in Example IV, resulting in a modified resin with a softening point of 77°C and an acid number of 56. This material was treated, at 90°C with four wt. per cent of N,N - dimethylaminoethanol and sufficient water to produce a dispersion consisting of 40% resin. The dispersion was evaluated for its ability to tackify Hartex® 103 (Table V).

## TABLE V

| Resin/rubber wt. ratio | 180° Peel PSTC 1 | 90° Quick stick PSTC 5 | Polyken probe | Rolling ball PSTC 6 |
|---|---|---|---|---|
| 40/60 | 0.9 | 0.6 | 482 | 2.2 |
| 50/50 | 1.5 | 1.0 | 682 | 6.4 |
| 60/40 | 1.8 | 1.1 | 661 | >10.0 |

Example VI

A monomer feed consisting of 1% alpha-pinene, 66% beta-pinene, 8% dipentene, and 25% diisobutylene was polymerized at 30°C in a fashion similar to Example #1. The polymer obtained was reacted with 9 wt.% maleic anhydride and 0.3 eq octadecanol. After reaction with N,N - dimethylethanolamine, the material was dispersed in water. The dispersion was formulated with Hartex® 103 and tested as previously described (Table VI).

## TABLE VI

| Resin/rubber wt. ratio | 180° Peel PSTC 1 | 90° Quick stick PSTC 5 | Polyken probe | Rolling ball PSTC 6 |
|---|---|---|---|---|
| 40/60 | 0.5 | 0.2 | 101 | 7.4 |
| 50/50 | 0.7 | 0.3 | 135 | >10 |
| 60/40 | 1.3 | 0—0.6 | 135 | >10 |

Example VII

A copolymer was prepared from a feed consisting of approximately 1—2% alpha-pinene, 75% beta-pinene, 8—9% dipentene and 15% 1-octadecene in the manner described in Example I. The copolymer obtained had a softening point of 18°C. It was reacted with 7 wt.% maleic anhydride at 190°C for 24 h, resulting in a resin of softening point 64°C, and acid number 62.

The maleinized resin was reacted with 8.9 wt.% octadecanol at 150°C for 20 hours. The product of this reaction had a 52°C softening point and an acid number of 45. It, in turn, was treated with 5.3 wt.% N,N - dimethylaminoethanol and sufficient water to produce a 43% solids dispersion. The dispersion was formulated with Hartex 103 at several resin/rubber ratios, and the formulations were applied to Mylar® and tested as in Example I. (See Table VII).

## TABLE VII

| Resin/rubber wt. ratio | 180° Peel PSTC 1 | 90° Quick stick PSTC 5 | Polyken probe | Rolling ball PSTC 6 |
|---|---|---|---|---|
| 40/60 | 0.6 | 0.4 | 463 | 2.4 |
| 50/50 | 1.1 | 0.8 | 647 | 3.0 |
| 60/40 | 1.4 | 1.0 | 687 | 6.5 |

Example VIII

The procedure of Example I is repeated using a polymerizable mixture composed of 55% beta-pinene and 45% of a petroleum hydrocarbon mixture having the analysis given above. Comparable results are obtained when the product is used as a tackifier in a natural rubber latex.

Example IX

The procedure of Example VIII is repeated using as the polymerizable mixture a mixture composed of 95% alpha-pinene and 5% piperylene. Comparable results are obtained when the product is used as a tackifier in a natural rubber latex.

Example X

A mixture of 25 wt.% of the dispersion of Example III, 25 wt.% of Aquatac 5527 produced in accordance with U.S. Patent 4,183,834, Example I, and Amsco 6140 provides good adhesion between two strips of Mylar® film.

Example XI

A portion (300 g) of the maleinized resin of Example I (acid number 151) was reacted with 1-decanol (63.9 g) for 5 hours at 150°C. The product had a softening point of 66°C and an acid number of 66. Fifty grams of this material was reacted with N,N - dimethylaminoethanol (2.52 g) and water. The dispersion was formulated with Hartex® 103 and tested as previously described. The results are shown in the following Table VIII.

## TABLE VIII

| Resin/rubber wt. ratio | 180° Peel PSTC 1 | 90° Quick stick PSTC 5 | Polyken probe | Rolling ball PSTC 6 |
|---|---|---|---|---|
| 30/70 | 0.5 | 0.2 | 130 | >10 |
| 40/60 | 1.1 | 0.5 | 102 | >10 |
| 50/50 | 1.0 | 0.0—0.5 | 0 | >10 |

The novel resinous compositions hereof, both in ionizable and ionized form, produced according to all or part of the steps of the process of the instant invention range from liquid under ambient conditions, though often it is quite viscous, on up to a brittle solid depending upon the softening point of the resinous compositions. The inherent viscosity of the resinous compositions hereof can be controlled in part by varying the degree of ionization of the resinous composition hereof in conventional fashion. The resulting resinous composition (ionizable or ionized) can be stored and handled in such form relatively easily and in the ionized form, low softening point resinous composition can be dispersed in water for storage and handling with little or no external heating. Resinous compositions with relatively high softening points may require some heating and occasionally cosolvent addition for dispersing in water. Additionally, low softening point resinous compositions hereof may be used to assist in dispersing relatively high softening point resinous compositions in water. Such resinous compositions possess excellent long-term stability which is a decided benefit. The resinous composition predispersed in water, can be admixed directly into a conventional latex adhesive formulation typically in proportion of about 15% to 300% by weight of the latex solids of such formulation. It must be recognized, however, that the proportion of resinous composition tackifier may vary greatly from these figures depending upon e.g. the particular latex, intended application and application technique. A latex adhesive formulation containing the novel resinous composition ionized with a volatile ionizing agent can be formed with the use of a foaming or blowing agent to provide a novel and useful foamed latex adhesive.

The novel resinous compositions hereof as tackifiers in latex adhesive formulations should be converted (or reconverted) into a hydrophobic resinous composition upon volatilization of water from the adhesive formulation. Volatilization of the ionizing agent from the resinous composition accomplishes this conversion.

A variety of latex adhesives are known in the art. Such latex adhesive formulations can be derived from natural or synthetic rubbers or elastomers, such as styrene-butadiene copolymers (SBR), natural rubbers, cyclized rubbers, acrylonitrilebutadiene copolymers (NBR), chlorinated rubbers, polychloroprene (neoprene), rubber hydrochloride, polysulfide rubber, carboxylic elastomers, silicone rubbers, polyurethane rubbers (isocyanate), acrylonitrile - butadiene - styrene copolymers (ABS); butyl rubber, polyisoprene, epichlorohydrin, homopolymer rubbers, epichlorohydrinethylene oxide rubbers, propylene oxide-allyl glycidyl ether copolymer rubbers, ethylene-propylene copolymer rubbers, ethylene-propylene-diene monomer terpolymer rubbers, or mixtures thereof and the like. Alternatively, such latex adhesive formulations can be derived from the various acrylic or vinyl latices such as, for example, ethylene ethylacrylate copolymers and ethylene vinylacetates.

When a novel resinous tackifier prepared by the process according to the invention is dispersed in a latex adhesive formulation and the water thereof volatilized along with the volatile ionizing agent, such novel resinous latex adhesive is ideally suited for a variety of uses. Typical uses of such adhesive formulation include pressure sensitive adhesives for application to tapes, labels, etc.; contact adhesives; and laminating adhesives.

Such novel latex adhesive formulations containing the tackifier hereof are extremely stable even for extended periods of time and the resinous tackifier therein provides exceptional tack, peel, and sheer strength to the latex adhesive formulations. They are substantially insensitive or resistant to water. The tackifier hereof dispersed in water also possesses exceptional hydrolytic stability which is a decided benefit for the product, especially when used as a tackifier in latex adhesive compositions. Such good performance of latex adhesives containing the novel resinous tackifier is due at least in part to the substantial absence of conventional rosin emulsifying agents which adversely affect the performance of the adhesives into which they are incorporated. Additionally, electrostatic spraying techniques for application of a latex adhesive containing the present resinous tackifiers can be advantageous.

## Claims

1. A method of preparation of a resinous dispersion useful for the tackification of elastomeric latices wherein an ionizable resinous mixture is prepared and a volatile ionizing agent is added, characterized by

(a) forming a resinous hydrocarbon polymer by polymerizing a hydrocarbon comprising at least one terpene hydrocarbon in the presence of an acid catalyst,

(b) reacting the resultant polymer with an alpha-beta-unsaturated carboxylic acid, carboxylic acid anhydride, or a lower alkyl half ester of a dicarboxylic acid,

(c) subsequently, optionally esterifying with an aliphatic or aralkyl alcohol, which is a $C_1$—$C_{30}$ aliphatic, aralkyl alcohol or a phenol,

(d) neutralizing with a base which is a volatile ionizing agent, and

(e) mixing with water whereby a stable dispersion compatible with said elastomeric latices is obtained.

2. The method according to claim 1 wherein the product from step (c) has softening point not above 125°C, and an acid number of 30—150.

3. The method according to claim 1, characterized by the fact that the terpene hydrocarbon polymer is formed from a terpene hydrocarbon mixture in which the terpene hydrocarbon is predominantly beta-pinene.

4. The method according to claim 1, characterized by the fact that the resinous hydrocarbon polymer is formed from more than 50% by weight of a terpene hydrocarbon and a minor amount of a non-terpenoid $C_5$—$C_{20}$ unsaturated hydrocarbon, which is dipentene, octadecene, piperylene, piperylene dimers, 2 - methyl - 2 - butene, 2,3 - dimethyl - 1 - butene, diisobutylene, 3 - methyl - 1 - pentene, 2 - methyl - 1 - pentene, 2 - methyl - 2 - pentene, 3 - methyl - 2 - pentene, isoprene, 6 - methyl - 1 - heptene, octene - 2, and mixtures thereof.

5. The method according to any one of claims 1 to 4, characterized by the fact that the catalyst is aluminum chloride and the polymerization step includes a thermal treatment at a temperature of from 150°C to 300°C for a period of from 5 to 20 hours.

6. A method as defined in claim 5, characterized by the fact that the terpene hydrocarbon is a pinene and the nonterpenoid hydrocarbon is piperylene.

7. The method according to any one of the preceding claims, characterized by the fact that diisobutylene is included as a monomer at a concentration of at least 3 wt. per cent.

8. The method according to claim 1, 2 or 3, characterized by the fact that maleic anhydride is used in step (b), in the amount of 5—27% by weight.

9. The method according to any one of the preceding claims, characterized by the fact that said alcohol in step (c) is octadecanol.

10. The method according to any one of the preceding claims, characterized by the fact that the base in step (d) is N,N - dimethylaminoethanol.

11. A composition of matter characterized by the fact that it comprises the product of any one of the preceding claims, and a latex polymer.

12. A composition of matter as defined in claim 11, characterized by the fact that the latex polymer is natural rubber latex.

8

# EP 0 128 673 B1

## Patentansprüche

1. Verfahren zur Herstellung einer harzartigen Dispersion, die sich zum Klebrigmachen elastomerer Latices eignet, wobei ein ionisierbares, harzartiges Gemisch hergestellt wird und ein flüchtiges Ionisationsmittel zugesetzt wird, gekennzeichnet durch

(a) Bilden eines harzartigen Kohlenwasserstoffpolymerisats durch Polymerisieren eines Kohlenwasserstoffs, der mindestens einen Terpenkohlenwasserstoff enthält, im Gegensatz eines Säurekatalysators,

(b) Umsetzen des erhaltenen Polymerisats mit einer alpha-, beta-ungesättigen Carbonsäure, einem alpha, beta-ungesättigten Carbonsäureanhydrid oder einem Halbester aus einer alpha, beta-ungesättigten Dicarbonsäure und einem niedrigmolekularen Alcanol,

(c) anschließend gewünschtenfalls Verestern mit einem aliphatischen oder Aralkylalkohol, der ein $C_1$- bis $C_{30}$-aliphatischer oder Aralkylalkohol ist, oder mit einem Phenol,

(d) Neutralisieren mit einer Base, die ein flüchtiges Ionisationsmittel ist, und

(e) Vermischen mit Wasser, wodurch eine stabile Dispersion erhalten wird, die mit den elastomeren Latices verträglich ist.

2. Verfahren gemäß Anspruch 1, worin das Produkt aus Stufe (c) einen Erweichungspunkt von nicht über 125°C und eine Säurezahl von 30 bis 150 besitzt.

3. Verfahren gemäß Anspruch 1, dadurch gekennzeichnet, daß das Polymerisat aus dem Terpenkohlenwasserstoff aus einem Gemisch aus Terpenkohlenwasserstoffen gebildet wird, indem der Terpenkohlenwasserstoff vorwiegend Betapinen ist.

4. Verfahren gemäß Anspruch 1, dadurch gekennzeichnet, daß das harzartige Kohlenwasserstoffpolymerisat aus über 50 Gew.-% eines Terpenkohlenwasserstoffs und einer geringeren Menge eines nicht-terpenoiden, ungesättigen Kohlenwasserstoffs mit 5 bis 50 Kohlenstoffatomen gebildet wird, der aus Dipenten, Octadecen, Piperylen, Piperylen-Dimeren, 2 - Methyl - 2 - buten, 2,3 - Dimethyl - 1 - buten, Diisobutylen, 3 - Methyl - 1 - penten, 2 - Methyl - 1 - penten, 2 - Methyl - 2 - penten, 3 - Methyl - 2 - penten, Isopren, 6 - Methyl - 1 - hepten, Octene-2 sowie Gemischen daraus besteht.

5. Verfahren gemäß einem der Ansprüche 1 bis 4, dadurch gekennzeichnet, daß der Katalysator Aluminiumchlorid ist und die Polymerisationsstufe eine Wärmebehandlung bei einer Temperatur von 150 bis 300°C während 5 bis 20 h umfaßt.

6. Verfahren gemäß Anspruch 5, dadurch gekennzeichnet, daß der Terpenkohlenwasserstoff ein Pinen ist und der nicht-terpenoide Kohlenwasserstoff Piperylen ist.

7. Verfahren gemäß einem der vorhergehenden Ansprüche, dadurch gekennzeichnet, daß als Monomer Diisobutylen in einer Konzentration von mindestens 3 Gew.-% verwendet wird.

8. Verfahren gemäß einem der Ansprüche 1, 2 oder 3, dadurch gekennzeichnet, daß in Stufe (b) Maleinsäureanhydrid in einer Menge von 5 bis 27 Gew.-% verwendet wird.

9. Verfahren gemäß einem der vorhergehenden Ansprüche, dadurch gekennzeichnet, daß der Alkohol in Stufe (c) Octadecanol ist.

10. Verfahren gemäß einem der vorhergehenden Ansprüche, dadurch gekennzeichnet, daß die Base in Stufe (d) N,N - dimethylaminoethanol ist.

11. Zusammensetzung, dadurch gekennzeichnet, daß sie das Produkt gemäß einem der vorhergehenden Ansprüche sowie ein Latexpolymerisat enthält.

12. Zusammensetzung gemäß Anspruch 11, dadurch gekennzeichnet, daß das Latexpolymerisat natürlicher Kautschuklatex ist.

## Revendications

1. Procédé de préparation d'une dispersion résineuse intéressante pour rendre visqueux ou poisseux des latex élastomères, dans lequel on prépare un mélange résineux ionisable et on ajoute un agent ionisant volatil, caractérisé par:

(a) la formation d'un polymère hydrocarboné résineux par polymérisation d'un hydrocarbure constitué par au moins un hydrocarbure de terpène en présence d'un catalyseur acide,

(b) la réaction du polymère résultant avec un acide carboxylique alpha, bêta-insaturé, un anhydride d'un tel acide carboxylique ou un demi-ester alkylique inférieur d'un acide dicarboxylique,

(c) ensuite, l'estérification facultative avec un alcool aliphatique ou aralkylique, qui est un alcool aliphatique en $C_1$—$C_{30}$, un alcool aralkylique ou un phénol,

(d) la neutralisation avec une base qui est un agent ionisant volatil, et

(e) le mélange avec de l'eau de manière à obtenir une dispersion stable compatible avec les latex élastomères susdits.

2. Procédé suivant la revendication 1, dans lequel le produit de la phase (c) a un point de ramollissement non supérieur à 125°C et un indice d'acide de 30—150.

3. Procédé suivant la revendication 1, caractérisé en ce que le polymère hydrocarboné de terpène est formé d'un mélange d'hydrocarbures de terpène, dans lequel l'hydrocarbure de terpène est en prédominance du bêta-pinène.

4. Procédé suivant la revendication 1, caractérisé en ce que le polymère hydrocarboné résineux est formé au départ d'une quantité supérieure à 50% en poids d'un hydrocarbure de terpène et d'une quantité mineure d'un hydrocarbure insaturé en $C_5$—$C_{20}$, non terpénoïde, qui est du dipentène, de l'octadécène, du pipérylène, des dimères de pipérylène, du 2 - méthyl - 2 - butène, du 2,3 - diméthyl - 1 - butène, du diisobutylène, du 3 - méthyl - 1 - pentène, du 2 - méthyl - 1 - pentène, du 2 - méthyl - 2 - pentène, du 3 - méthyl - 2 - pentène, de l'isoprène, du 6 - méthyl - 1 - heptène, de l'octène - 2 et leurs mélanges.

5. Procédé suivant l'une quelconque des revendications 1 à 4, caractérisé en ce que le catalyseur est du chlorure d'aluminium et la phase de polymérisation comprend un traitement thermique à une température de 150 à 300°C pendant une période de 5 à 20 heures.

6. Procédé suivant la revendication 5, caractérisé en ce que l'hydrocarbure de terpène est un pinène et l'hydrocarbure non terpénoïde est du pipérylène.

7. Procédé suivant l'une quelconque des revendications précédentes, caractérisé en ce que le diisobutylène est inclus à titre de monomère à une concentration d'au moins 3% en poids.

8. Procédé suivant la revendication 1, 2 ou 3, caractérisé en ce que l'on utilise de l'anhydride maléïque dans la phase (b), en une quantité de 5 à 27% en poids.

9. Procédé suivant l'une quelconque des revendications précédentes, caractérisé en ce que l'alcool susdit de la phase (c) est de l'octadécanol.

10. Procédé suivant l'une quelconque des revendications précédentes, caractérisé en ce que la base de la phase (d) est du N,N - diméthylaminoéthanol.

11. Composition caractérisée en ce qu'elle est constituée par le produit de l'une quelconque des revendications précédentes et par un polymère de latex.

12. Composition suivant la revendication 11, caractérisée en ce que le polymère de latex est un latex de caoutchouc naturel.